# EUROPEAN PATENT APPLICATION

(11) **EP 1 025 785 A1**
(43) Date of publication of application: **09.08.2000**
(21) Application number: 99102120.5
(22) Date of filing: 03.02.1999
(51) Int. Cl.: A47J 31/08

(54) **Filtering cartridge for use in beverage making apparatus**

(71) Applicant: ARNELL W. S.A., 6900 Lugano - Svizzera (CH)
(72) Inventor: Carnelli, Pier Luigi, 21013 Gallarate (Varese) (IT)
(74) Representative: Sutto, Luca, Ing.

(57) **Abstract**

There is disclosed a filtering cartridge for use in beverage making apparatus comprising a holding envelope (5) of flat shape formed cf two sheets (14) mutually facing and mutually in engagement along a perimetric connecting band. A frangible line extends on each of said flat sheets to define an opening band for disengagement from the holding envelope so as to bring the cartridge from a non-use condition, in which the collection space from a non-use condition, in which the collection space (6) is closed and delimited by the envelope (5), to a use condition in which the collection space (6) is open on top to enable access of a water flow to the space where a preparation (7) is accommodated.

## Description

The present invention relates to a filtering cartridge for use in beverage making apparatus.

In particular, the cartridge in reference is intended for use in apparatus for making beverages such as coffee, tea and other beverages in which a water flow from a feed container or a delivery line passes through the filtering cartridge, where it picks up the flavour and taste of the preparation contained in the cartridge itself, to be then deposited into a reception container from which it can be taken up by a consumer.

It is known that for beverage making, in particular when hot beverages such as coffee, tea and so on are concerned, use is widely made of apparatus comprising a tank containing a predetermined amount of water possibly heated to the desired temperature which is placed on top of a filtering region in which the filtering cartridge is to be put.

Upon command of a user, water can fall, by gravity, into the filtering region and pass through the filtering cartridge being then received in a holding chamber from which the beverage can be taken up in the desired amounts by the user.

Filtering cartridges presently on the market for being used as briefly described above have a substantially flat structure of substantially circular shape. These filtering cartridges are formed of two sheets of paper material and more specifically of filter paper, which are mutually coupled along a perimetric connecting edge; a small space is defined between the two sheets so that a predetermined amount of a preparation such as coffee powder for example, is housed therein, which preparation is adapted to transfer its taste and flavour to the water flow passing therethrough on use.

Although the above described filtering cartridges are widely used on the market, they however have many drawbacks in particular from the point of view of their practical use and efficient operation, which drawbacks adversely affect the quality of the beverage produced with said cartridges.

It is in fact to note that the above described circular filtering cartridges are usually inserted into the beverage-making apparatus at a filtering region which due to its own nature has a truncated conical conformation. In more detail, the filtering region defines a seating in the form of an overturned truncated cone (in the following referred to as frusto-conical seating), so that it can conveniently channel the water from the tank towards the reception chamber; the filtering cartridge is placed in this frusto-conical seating but, as it has a circular shape, it fits the frusto-conical seating in a bad manner. In other words, the filtering cartridge has a light tendency to get deformed and bend so that the cartridge edge does not perfectly adhere to the inner surface of the frusto-conical seating and on the contrary defines, together with said seating, passages or leaks through which the water coming from the tank can escape.

Practically, when a water flow is sent from the tank to the cartridge for beverage making, the water passes partly through the filter and partly through said passages without being submitted to the cartridge action and therefore dilutes the beverage that consequently turns out to be qualitatively worse.

In addition to the above, it is to note that the above described traditional filtering cartridge, once it has been put under work conditions, has an upper sheet that, although permeable to water, causes said water to deviate towards the cartridge periphery thereby further increasing the above described negative effect.

In conclusion, due to the particular structure of the traditional filtering cartridges, the water from the tank passes through the cartridge and the preparation contained therein only partly, being partly deviated towards the cartridge periphery and therefore going through passages that are inevitably created between the perimetric edge of the cartridge and the inner wall of the frusto-conical seating receiving it.

Under this situation, it is a fundamental aim of the present invention to provide a new filtering cartridge for use in beverage making apparatus capable of substantially solving all the above mentioned drawbacks.

In particular, it is a fundamental object of the invention to provided a new filtering cartridge capable of substantially sending the whole water flow from the tank of the apparatus in which the cartridge is installed to the preparation contained in the cartridge itself, without problems connected with diluting of the thus-produced beverage.

Beside this fundamental object, it is also an important object of the invention to provide a filtering cartridge adapted to be employed with ease and with the maximum watertightness in conventional frusto-conical seatings provided for the purpose in traditional beverage making apparatus, without involving structural complexities and marked construction burdens.

The foregoing and further objects that will become more apparent in the course of the following description are substantially achieved by a filtering cartridge in accordance with the features set forth in the appended claim 1.

Further features and advantages will be best understood from the detailed description of a preferred, non-exclusive, embodiment of a filtering cartridge in accordance with the invention. This description will be taken hereinafter by way of non-limiting example, with reference to the accompanying drawings, in which:
- Fig. 1 is a diagrammatic sectional view of a portion of a beverage making apparatus in which a filtering cartridge in accordance with the invention (seen in perspective) is inserted, which cartridge is shown in its use condition;
- Fig. 2 is a front view of the filtering cartridge in accordance with the invention in its non-use condition; and
- Fig. 3 shows the cartridge of Fig. 2 during removal of a separation band associated therewith for bringing the cartridge itself from its non-use condition to its use condition in the apparatus shown in Fig. 1.

With reference to the accompanying drawings, a cartridge for use in beverage making apparatus in accordance with the present invention has been generally identified by reference numeral 1.

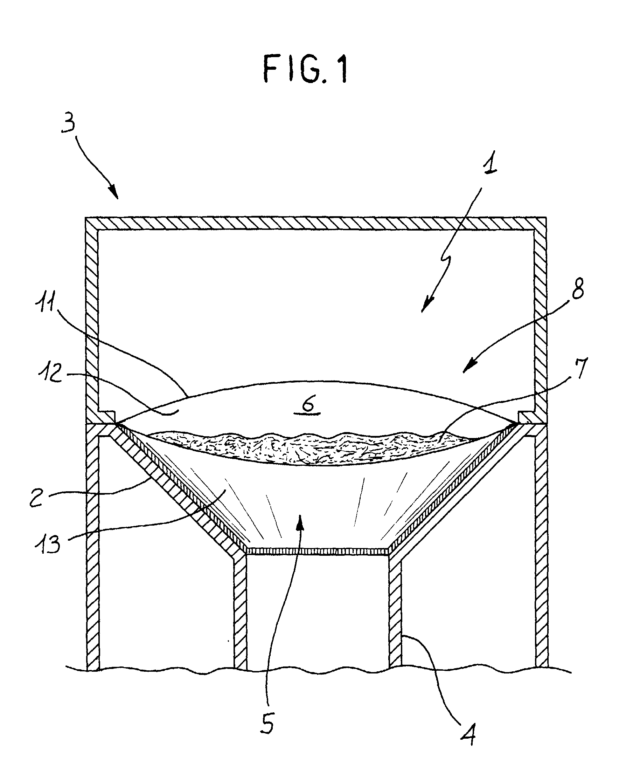

In particular, as shown in Fig. 1, the filtering cartridge 1 is positioned in a frusto-conical seating 2 conventionally provided in the beverage making apparatus 3 (only partly shown in Fig. 1).

The cartridge operates above a beverage collecting chamber (not shown) which is reached by the water coming out of cartridge 1, via a channel 4.

Cartridge 1 comprises a holding envelope 5 defining a collection space 6 to accommodate a predetermined amount of a preparation 7, such as coffee, tea or another preparation, in the form of granules, powder or other elements of reduced sizes.

When the cartridge is under use conditions, the preparation 7 is passed through by the water from tank 8 and transfers its properties in terms of taste and flavour to the water itself that is used to make the desired particular beverage.

It is to note that, in order to enable passage of water from the outside to the inside of the filtering cartridge towards the collection space, said cartridge is typically made at least partly of a material permeable to water.

At all events, the preparation contained in the collection space 6 will have features (in particular geometric sizes) preventing said preparation from passing through the envelope, so that it will stay inside the collection space during full use of the cartridge.

Advantageously, the cartridge of the invention, when it is put under use conditions comprises means 8 operatively associated with the holding envelope, which is arranged to direct the water flow impinging on the cartridge towards the collection space.

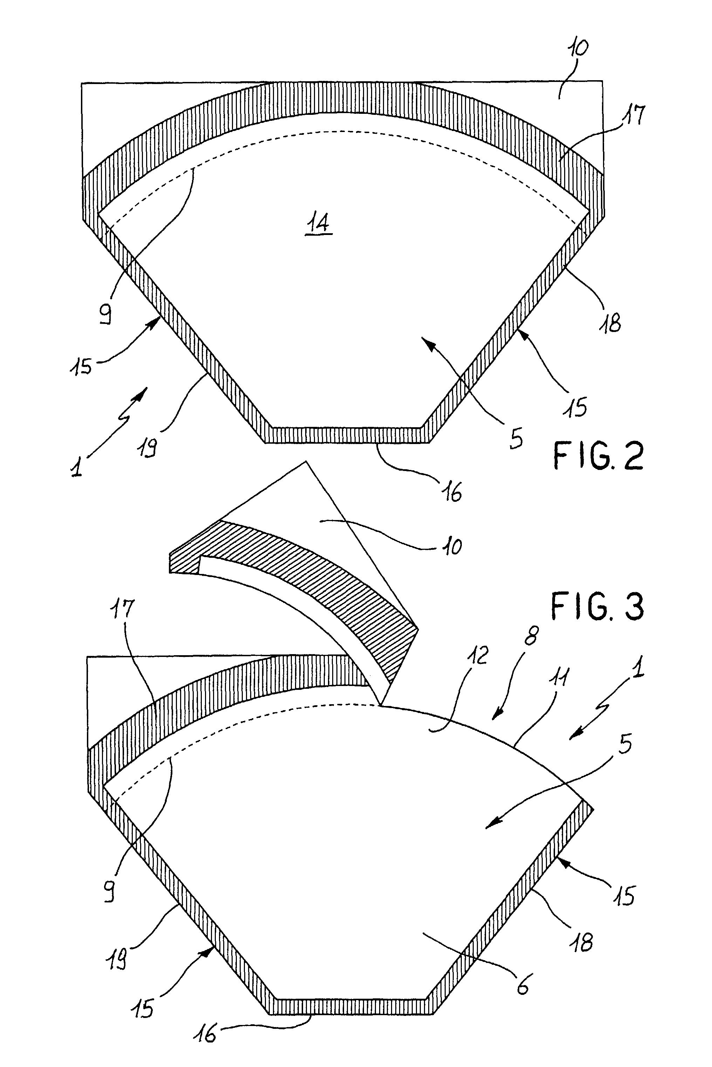

In more detail the holding envelope comprises (as shown in Figs. 2 and 3) a frangible line 9 for example defined by a plurality of consecutive cuts disposed close to each other or by a folding line, or at all events by a structural weakening present on the envelope; this frangible line delimits an opening band 10 which can be at least partly disengaged from the holding envelope 5 along said frangible line as shown in Fig. 3. By disengaging the opening band from the rest of the envelope, the cartridge is brought from a non-use condition, shown in Fig. 2, in which the collection space is closed and completely delimited by the envelope, to a use condition, in which the collection space has an access opening 11 directed towards the preparation contained in the collection space. The access opening is delimited by an edge portion 12 of the envelope defining said means for directing the water flow to the collection space. In other words, once the opening band has been removed from the rest of the envelope, the latter exhibits an upper access opening enabling the water to immediately accede to the collection space without any shielding, thereby impinging on the preparation contained in the collection space. In addition, once the opening band 10 has been removed, the edge 12 of envelope 5 surrounding the access opening acts as a lead-in portion for the water coming from the tank and therefore defines the means for directing the water flow towards the collection space.

The filtering cartridge of the invention under non-use conditions (Fig. 3) has a substantially flat shape, whereas when it is under use conditions the holding envelope substantially takes the form of an overturned truncated cone, which shape matches that of the seating 2 provided in the apparatus 3 (see Fig. 1). The access opening to the preparation collection space is placed at the upper edge of the side wall 13 of truncated conical form defining part of the envelope and embodying the means for directing the water flow towards the collection space.

Advantageously, in the embodiment shown, the holding envelope comprises at least two flat sheets 14 mutually facing and mutually in engagement along a perimetric connecting band 15; each of the flat sheets substantially has the shape of an isosceles trapezium the major base of which, turned upwardly, is of straight, undulated or, as in the example shown, curved conformation.

The frangible line 9 extends on each of the flat sheets between opposite regions of the connecting band 15. In more detail, the perimetric connecting band making the two sheets integral with each other and enabling closure of the collection space, is defined by a first lower portion 16, a second upper portion 17 (which is curved, undulated or rectilinear or of some other form) opposite to the lower portion, and a pair of sloping side portions 18, 19 joining the opposite ends of the lower and upper portions together.

The frangible line therefore extends between opposite regions of each sloping portion 18, 19 of the perimetric connection band 15 that in the embodiment shown substantially follows a curved line.

By carrying out separation of the opening band 10 along the frangible line an interruption in the continuity between the sloping portions of the perimetric connection band and the upper portion is obtained, so that the collection space is open and accessible through opening 11 which is delimited by the upper portion of the envelope side walls.

From the point of view of the specific structure and the materials of which the envelope is made, it is to note that the latter is at least partly made of a material permeable to water.

In particular, since under use conditions water passes through the access opening, impinges on the preparation and then must come out of the lower part of the cartridge, at least one lower portion of said cartridge is to be made of a material permeable to water. Preferably, for making production easier, the whole holding envelope can be made of a material permeable to water.

In the embodiment herein shown, each of the flat sheets defining the envelope is made of filter paper.

The invention achieves important advantages.

While being very simple, as it is an article made of paper material of the disposable type, the filtering cartridge of the invention is very advantageous as compared with cartridges of the traditional type.

In fact, while the cartridge in question can be easily handled and put on sale without any possibility that the preparation contained therein may escape therefrom, it is to note that under use conditions the cartridge can be brought to a configuration (Fig. 1) in which the water from the tank is completely deviated to space 6 and fully impinges on the preparation without any possibility of escaping through other passages.

In addition, the shielding action exercised by the upper portion of the envelope in traditional filtering cartridges has been completely eliminated because, due to removal of the opening band, the filtering cartridge under use conditions substantially appears in the form of an overturned truncated cone, therefore capable of offering the greatest possibility of directing water towards the collection space, thereby making the cartridge very efficient.

In spite of the above described unquestionable advantages, the cartridge can be manufactured in a very easy manner and its structure is very simple as it consists of two flat sheets of appropriate shape to which a frangible line has been merely added, which line can be directly formed during die-cutting of the flat sheets.

## Claims

1. A filtering cartridge for use in beverage making apparatus in which a water flow is intended for passing through said filtering cartridge,
said cartridge (1) comprising a holding envelope (5) having at least one portion of material permeable to water, said envelope defining a collection space (6) for accommodating a predetermined amount of a preparation (7) substantially unable to pass through said envelope (5), characterized in that, at least under use conditions, the filtering cartridge comprises means (8) operatively associated with the holding envelope and arranged to direct said water flow towards said collection space.

2. A filtering cartridge as claimed in claim 1, characterized in that the holding envelope comprises a frangible line (9) delimiting an opening band (10) that can be at least partly disengaged from the holding envelope (5) along the frangible line for bringing the cartridge from a non-use condition, in which the collection space (6) thereof is closed and delimited by said envelope, to a use condition in which the collection space (6) has an access opening (11) delimited by an edge portion (12) of said envelope defining said means (8) for directing the water flow towards the collection space.

3. A filtering cartridge as claimed in claim 2, characterized in that said access opening (11) directly communicates with the collection space (6) in which said preparation is accommodated.

4. A filtering cartridge as claimed in claim 2, characterized in that, under non-use conditions of said filtering cartridge, the holding envelope (5) has a substantially flat shape and, under use conditions of the filtering cartridge, the holding envelope substantially is in the form of an overturned truncated cone, said access opening being put at an upper edge of the side wall (13) of the envelope defining said means for directing the water flow towards the collection space.

5. A filtering cartridge as claimed in claim 4, characterized in that the holding envelope comprises at least two flat sheets (14) mutually facing and mutually in engagement along a perimetric connection band (15).

6. A filtering cartridge as claimed in claim 5, characterized in that each of said flat sheets (14) substantially has the form of an isosceles trapezium.

7. A filtering cartridge as claimed in claim 5, characterized in that said frangible line (9) extends on each of said flat sheets between opposite regions of said connecting band.

8. A filtering cartridge as claimed in claim 7, characterized in that said perimetric connecting band (15) comprises a lower portion (16), an upper portion (17) opposite to said lower portion and a pair of sloping side portions (18, 19) joining the opposite ends of said lower and upper portions together.

9. A filtering cartridge as claimed in claim 8, characterized in that said frangible line (9) extends from a sloping portion of said perimetric connection band to the opposite sloping portion.

10. A filtering cartridge as claimed in anyone of the preceding claims, characterized in that said holding envelope (5) is substantially fully made of a material permeable to water.

11. A filtering cartridge as claimed in claim 10 and in claim 5, characterized in that each of said sheets (14) is made of filter paper.
